(19) Europäisches Patentamt
European Patent Office
Office européen des brevets

(11) **EP 3 612 803 B1**

(12) **FASCICULE DE BREVET EUROPEEN**

(45) Date de publication et mention
de la délivrance du brevet:
**22.02.2023 Bulletin 2023/08**

(21) Numéro de dépôt: **18721966.2**

(22) Date de dépôt: **18.04.2018**

(51) Classification Internationale des Brevets (IPC):
**G01F 1/684** $^{(2006.01)}$    **G01F 1/688** $^{(2006.01)}$
**G01F 1/696** $^{(2006.01)}$    **G01F 25/10** $^{(2022.01)}$
**G01F 15/04** $^{(2006.01)}$

(52) Classification Coopérative des Brevets (CPC):
**G01F 1/6845; G01F 1/6888; G01F 1/696;
G01F 1/6965; G01F 15/043; G01F 25/15**

(86) Numéro de dépôt international:
**PCT/EP2018/059817**

(87) Numéro de publication internationale:
**WO 2018/192934 (25.10.2018 Gazette 2018/43)**

(54) **DISPOSITIF DE MESURE DE VITESSE OU DE DEBIT DE GAZ**

VORRICHTUNG ZUR MESSUNG EINER GAS-STRÖMUNGSGESCHWINDIGKEIT ODER EINER GAS-DURCHFLUSSRATE

APPARATUS FOR MEASURING GAS FLOW SPEED OR GAS FLOW RATE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.04.2017 FR 1753342**

(43) Date de publication de la demande:
**26.02.2020 Bulletin 2020/09**

(73) Titulaire: **Centre National de la Recherche
Scientifique
75016 Paris (FR)**

(72) Inventeurs:
- **TAINOFF, Dimitri
  38000 Grenoble (FR)**
- **BOURGEOIS, Olivier
  38380 Saint Laurent du Pont (FR)**

(74) Mandataire: **IPAZ
Bâtiment Platon
Parc Les Algorithmes
91190 Saint-Aubin (FR)**

(56) Documents cités:
**US-A- 5 231 877**    **US-A- 5 406 841**
**US-B1- 6 662 121**    **US-B2- 6 871 538**

EP 3 612 803 B1

**Description**

Domaine

La présente demande concerne un instrument de mesure, en particulier un dispositif de mesure de vitesse ou de débit d'un gaz.

Exposé de l'art antérieur

Dans divers systèmes industriels, ou par exemple dans des dispositifs de chauffage ou de climatisation, on souhaite mesurer la vitesse ou le débit d'un gaz. Le gaz circule par exemple dans une canalisation.

La figure 1 correspond à la figure 8 du brevet US 6871538 et représente un dispositif 100 de mesure de débit d'un fluide 102 circulant de la gauche vers la droite.

Le dispositif 100 comprend, sur un support, par exemple un substrat 104 de silicium, une couche isolante 106 formant une membrane 107, délimitée dans la figure par des pointillés, qui recouvre une cavité 108 formée dans le substrat. Un élément chauffant 110 est disposé en partie centrale de la membrane. Deux associations de pistes thermoélectriques alternées 112 en aluminium et 114 en silicium connectées électriquement en série sont disposées symétriquement à droite et à gauche de l'élément chauffant. Les jonctions entre pistes thermoélectriques de chaque association en série sont disposées alternativement sur la membrane 107 (jonctions 122) et sur la couche 106 en dehors de la membrane (jonctions 120). Les pistes thermoélectriques de chaque association série fournissent une tension, VR entre des bornes 116R et 118R, VL entre des bornes 116L et 118L, résultant de la différence entre la température des jonctions 120 et celle des jonctions 122. Le dispositif 100 comprend par ailleurs un capteur 124 de température du support.

Le débit à mesurer est obtenu à partir de la différence entre les tensions VR et VL fournies par les deux séries de pistes thermoélectriques. La mesure résulte d'une différence de température entre les côtés de la membrane. En effet, en l'absence de débit de gaz, la membrane a des températures symétriques à droite et à gauche de l'élément chauffant. Un débit de gaz de la gauche vers la droite crée une dissymétrie dans les températures de la membrane.

Les dispositifs de mesure de vitesse ou de débit à élément chauffant, par exemple du type du dispositif 100, présentent l'inconvénient d'une consommation d'énergie élevée par l'élément chauffant, typiquement supérieure à 1 mW et pouvant aller jusqu'à 100 mW. D'autres dispositifs de mesure de vitesse ou de débit à élément chauffant sont connus de US 6 662 121 B1, US 5 231 877 A et US 5 406 841 A. D'autres types de dispositifs connus de mesure de vitesse ou de débit présentent divers inconvénients, par exemple des pièces en mouvement ou un encombrement élevé pouvant faire obstacle à l'écoulement du gaz.

Résumé

Un mode de réalisation prévoit un dispositif de mesure de vitesse ou de débit de gaz permettant de pallier tout ou partie des inconvénients décrits ci-dessus.

Un mode de réalisation prévoit un dispositif de mesure de vitesse ou de débit de gaz, présentant une consommation d'énergie particulièrement faible.

Un mode de réalisation prévoit un dispositif de mesure de vitesse ou de débit de gaz, autonome en énergie.

Ainsi, un mode de réalisation prévoit un dispositif de mesure de vitesse ou de débit d'un gaz à température différente d'une température ambiante, comprenant : une première plateforme suspendue par des premiers bras au-dessus d'un support adapté à être maintenu à la température ambiante, les premiers bras comportant des pistes thermoélectriques configurées pour fournir une première tension à partir de la différence entre les températures de la première plateforme et du support ; et une unité de traitement adaptée à fournir la mesure de vitesse ou de débit à partir de la première tension, de la température du gaz et de la température ambiante.

Selon un mode de réalisation, le dispositif comprend en outre un capteur de température ambiante.

Selon un mode de réalisation, le dispositif comprend en outre un capteur de température du gaz.

Selon un mode de réalisation, le dispositif comprend en outre une deuxième plateforme suspendue par des deuxièmes bras au-dessus du support, les deuxièmes bras comportant des pistes thermoélectriques configurées pour fournir une deuxième tension à partir de la différence entre les températures de la deuxième plateforme et du support, les premiers et deuxièmes bras ayant des résistances thermiques différentes et/ou les première et deuxième plateformes ayant des dimensions différentes, et l'unité de traitement étant adaptée à fournir la température du gaz à partir des première et deuxième tensions.

Selon un mode de réalisation, les plateformes sont de mêmes dimensions, les premiers bras pris en parallèle ont une conductance thermique K et les deuxièmes bras pris en parallèle ont une conductance thermique K', et l'unité de traitement est adaptée à : calculer la température Tp de la première plateforme à partir de la première tension et de la température ambiante, et la température Tp' de la deuxième plateforme à partir de la deuxième tension et de la température ambiante ; et calculer la température Tg du gaz vérifiant la relation :

$$Tg= \frac{P*Tp-P'*Tp'}{P-P'},$$

où P et P' vérifient les relations

$$P=K*(Tp-Tamb) \quad et \quad P'=K'*(Tp'-Tamb),$$

Tamb étant la température ambiante.

Selon un mode de réalisation, pour chaque plateforme, les bras pris en parallèle ont une conductance thermique comprise entre 1 et 1000 nW/K et la plateforme a entre 5 et 200 $\mu$m de côtés.

Selon un mode de réalisation, le dispositif comprend une pluralité de premières plateformes suspendues au-dessus du support par des bras comportant des pistes thermoélectriques, les pistes thermoélectriques des diverses premières plateformes étant reliées en série.

Selon un mode de réalisation, l'unité de traitement est alimentée par un dispositif thermoélectrique d'alimentation adapté à générer une puissance à partir de la différence entre la température du gaz et la température ambiante.

Selon un mode de réalisation, le dispositif thermoélectrique d'alimentation est une matrice de troisièmes plateformes suspendues au-dessus du support par des bras comportant des pistes thermoélectriques, les pistes thermoélectriques des troisièmes plateformes d'une même rangée étant connectées en parallèle et les rangées étant connectées en série.

Selon un mode de réalisation, chaque plateforme est située au-dessus d'un canal, deux bras comportant chacun une piste thermoélectrique d'un premier type reliant un côté de la plateforme à l'un des bords du canal, et deux bras comportant chacun une piste thermoélectrique d'un deuxième type reliant le côté opposé de la plateforme à l'autre bord du canal.

Selon un mode de réalisation, les bras comprennent des bandes électriquement isolantes sous les pistes thermoélectriques.

Selon un mode de réalisation, les pistes thermoélectriques sont en tellure de bismuth dopé.

Selon un mode de réalisation, le support est disposé dans un tube de circulation du gaz.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1, décrite précédemment, représente un dispositif de mesure de débit d'un fluide ;
les figures 2A et 2B sont des vues schématiques respectivement de dessus et en coupe d'un mode de réalisation d'un capteur de vitesse d'un gaz ;
la figure 3 est une vue en coupe schématique d'un mode de réalisation d'un dispositif de mesure de débit utilisant le capteur des figures 2A et 2B ;
la figure 4 est une vue schématique de dessus de deux capteurs du type de celui des figures 2A et 2B ; et
la figure 5 est une vue schématique d'un dispositif thermoélectrique comprenant une matrice de capteurs du type de celui des figures 2A et 2B.

Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés.

Dans la description qui suit, lorsque l'on fait référence à des qualificatifs de position absolue, tels que les termes "gauche", "droite", etc., il est fait référence à l'orientation de l'élément concerné dans les figures concernées, étant entendu que, dans la pratique, les dispositifs décrits peuvent être orientés différemment. Sauf précision contraire, le terme "sensiblement", signifie à 10 % près, de préférence à 5 % près.

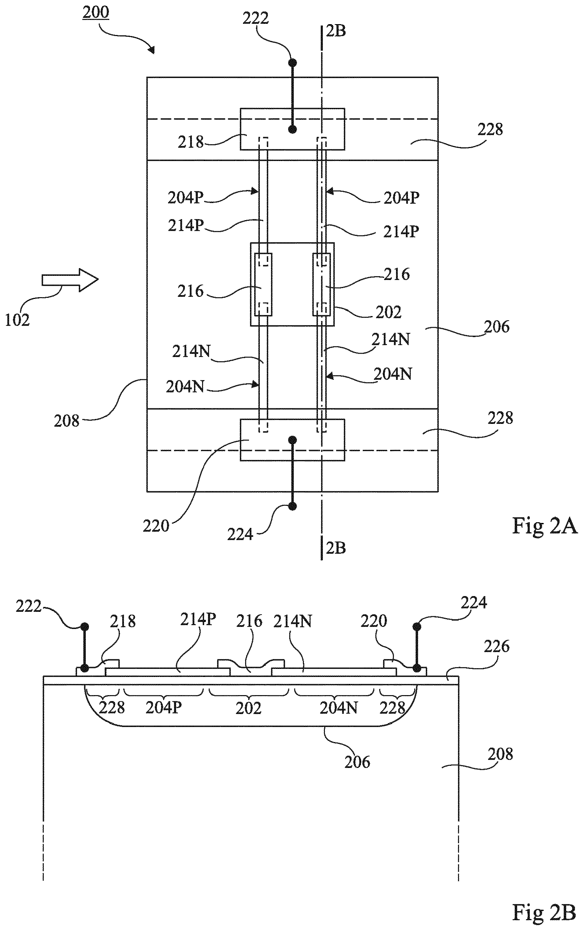

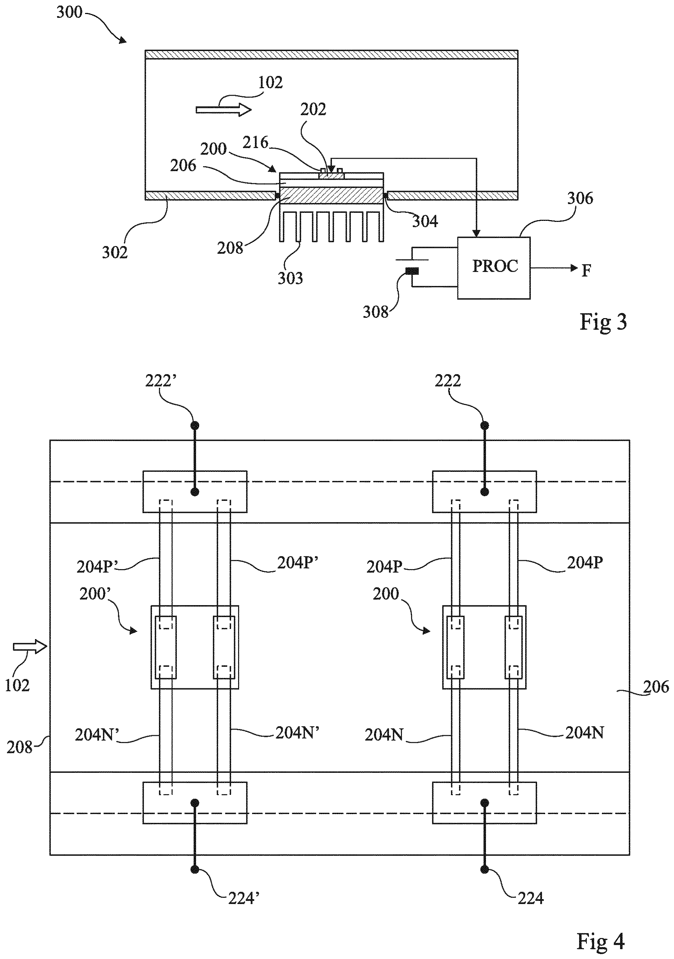

Les figures 2A et 2B sont des vues schématiques respectivement de dessus et en coupe d'un mode de réalisation d'un capteur 200 de vitesse d'un gaz 102. Le gaz 102 est en mouvement, de gauche à droite en figure 2A, et orthogonalement au plan de la figure 2B. Le capteur 200 est destiné à être utilisé dans un dispositif de mesure de vitesse ou de débit, de type décrit ci-après en relation avec la figure 3.

Le capteur 200 comprend une plateforme 202, par exemple rectangulaire, suspendue par des bras 204P et 204N au-dessus d'un canal 206 creusé dans la face avant d'un substrat 208 par exemple en silicium. A titre d'exemple, deux bras 204P relient un côté de la plateforme à un bord du canal et deux bras 204N relient le côté opposé de la plateforme à l'autre bord du canal. Le canal 206 s'étend dans la direction d'écoulement du gaz.

Chaque bras 204P ou 204N comprend une piste thermoélectrique 214P, 214N, par exemple en tellure de bismuth, dopé de type P dans les bras 204P et de type N dans les bras 204N. Les pistes se prolongent sur la plateforme et sur les bords du canal. Des îlots métalliques 216 situés sur la plateforme connectent les pistes en série, en deux paires 214P-214N. Les paires 214P-214N relient en parallèle deux plots métalliques 218 et 220 connectés respectivement à des bornes 222 et 224.

La plateforme 202 est par exemple une partie d'une couche isolante 226 qui recouvre par ailleurs le substrat 208 en dehors du canal 206. A titre d'exemple, la couche isolante 226 peut être en oxyde de silicium, en nitrure de silicium ou en oxyde d'aluminium. A titre d'exemple, dans chacun des bras, une bande de la couche isolante 226 supporte la piste thermoélectrique du bras. Le canal 206 peut s'étendre sous une partie 228 de la couche isolante près des bords du canal, en fonction du procédé de fabrication utilisé.

En fonctionnement, le gaz circule autour de la plateforme 202. Le substrat est maintenu à une température différente de celle du gaz. A titre d'exemple, l'écart de température gaz-substrat est supérieur à 0,5°C. Par exemple, le substrat est maintenu à la température ambiante et le gaz est à une température différente de la température ambiante. Une tension liée à l'écart entre les températures de la plateforme et du substrat apparaît entre les bornes 222 et 224. Cette tension est liée à la vitesse du gaz.

En effet, en l'absence de mouvement du gaz, du fait de la conductance thermique des bras, la température de la plateforme s'approche de celle du substrat, et la tension entre les bornes 222 et 224 n'est pas significativement différente de zéro. Lorsque la vitesse du gaz augmente, du fait de la résistance thermique des bras, la température de la plateforme s'éloigne de celle du substrat pour se rapprocher de celle du gaz, et la tension entre les bornes 222 et 224 augmente.

La résistance thermique des bras et les dimensions de la plateforme sont de préférence prévues pour obtenir une température de plateforme sensiblement uniforme. La résistance thermique des bras et les dimensions de la plateforme sont par exemple prévues pour que la température de plateforme, qui est comprise entre celles du substrat et du gaz, soit sensiblement différente de la température du substrat et de celle du gaz, par exemple différente de plus de 10% de l'écart de température gaz-substrat, lorsque la vitesse de gaz est comprise par exemple entre 0,1 et 10 m/s. A titre d'exemple, la plateforme a entre 5 et 200 $\mu$m de côtés. De préférence, la conductance thermique pour l'ensemble des bras disposés en parallèle entre la plateforme et le substrat est comprise entre 1 et 1000 nW/K.

Les bras ont à titre d'exemple un rapport longueur sur largeur compris entre 10 et 50. La largeur des bras est par exemple comprise entre 0,5 et 3 $\mu$m. La couche isolante 226 a par exemple une épaisseur comprise entre 50 et 500 nm. Les pistes thermoélectriques ont par exemple des épaisseurs comprises entre 100 et 300 nm. A titre d'exemple, les îlots métalliques 216 et les plots métalliques 218 et 220 sont en nickel, en palladium ou en titane-or. A titre d'exemple, les îlots métalliques 216 et les plots métalliques 218 et 220 ont une épaisseur comprise entre 50 et 500 nm.

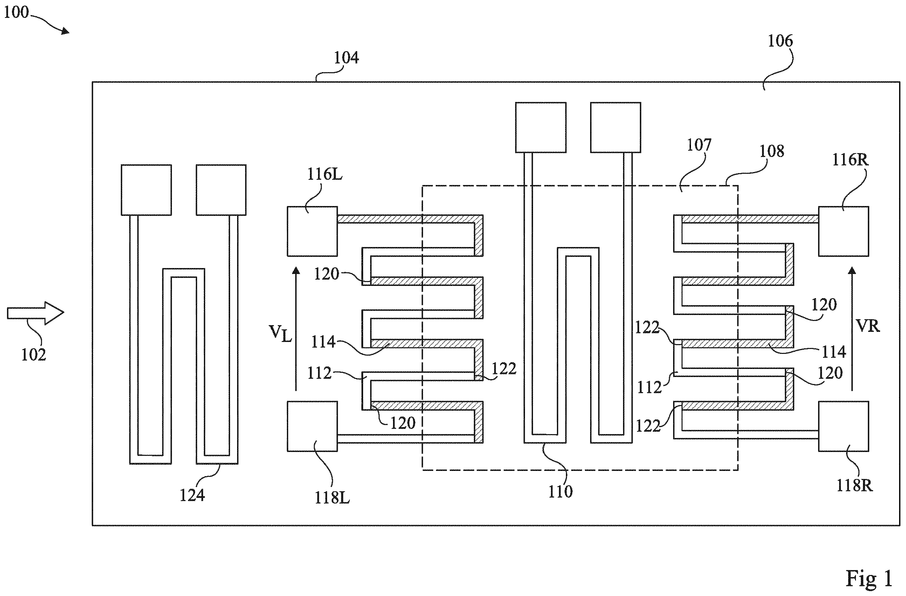

Selon un avantage, la plateforme 202 du capteur 200 est dépourvue d'élément chauffant, contrairement à la membrane 107 du dispositif 100 de la figure 1, et de ce fait le capteur 200 ne consomme pas d'énergie.

Un avantage tout particulier du capteur 200 résulte du fait qu'il fournit une unique tension provenant de la température de la plateforme 202, contrairement au dispositif 100 de la figure 1 qui fournit deux tensions VR et VL provenant de températures différentes entre deux côtés d'une membrane. Le capteur 200 permet donc une mesure particulièrement précise, contrairement au dispositif 100 de la figure 1, dans lequel le résultat de la différence entre les tensions VR et VL n'est pas susceptible de fournir une valeur suffisamment élevée pour une mesure précise, un très fort chauffage, typiquement à des températures pouvant aller jusqu'à 150°C, étant nécessaire en pratique pour obtenir une différence de tension suffisante pour la mesure.

La figure 3 est une vue en coupe schématique d'un exemple de dispositif 300 de mesure de débit d'un gaz 102, utilisant le capteur 200 des figures 2A et 2B.

Le dispositif 300 comprend un tube 302 dans lequel le gaz 102 circule. Le capteur 200 est relié thermiquement à une source thermique à la température ambiante, par exemple un radiateur à ailettes 303 en contact avec l'air ambiant au travers d'une ouverture 304 réalisée dans la paroi du tube. Le tube 302 est par exemple destiné à être raccordé à une canalisation de circulation du gaz par des éléments non représentés tels que des raccords à cône ou à olive, ou des brides. La canalisation fait par exemple partie d'un système complet tel qu'un système industriel ou un système de climatisation.

Les bornes 222 et 224 (non visibles en figure 3) du capteur 200 sont reliées à une unité de traitement 306 (PROC) alimentée par une source d'alimentation 308. A titre d'exemple, l'unité de traitement comprend une mémoire et un processeur prévu pour exécuter un programme.

En fonctionnement, comme mentionné ci-dessus, la température du gaz est différente de la température ambiante. Dans l'exemple du dispositif 300, la température ambiante, la température du gaz, ainsi que des propriétés du gaz liées à sa nature et sa pression, telles que sa masse volumique, sa capacité thermique massique, sa conductivité thermique ou sa viscosité, sont fournies à l'unité de traitement 306 par un utilisateur tel que, par exemple, une unité de commande du système complet. A titre de variante, le dispositif 300 peut être équipé de capteurs supplémentaires destinés à mesurer la température ambiante et/ou la température du gaz et/ou des propriétés du gaz. Un capteur supplémentaire de température ambiante et/ou de température du gaz peut être par exemple une thermistance telle qu'une résistance de platine, ou un dispositif thermoélectrique tel qu'un capteur à thermocouple. Un exemple de capteur supplémentaire de température du gaz sera décrit ci-après en relation avec la figure 4.

L'unité de traitement fournit une valeur mesurée F du débit du gaz à partir de la tension fournie par le capteur 200, de la température du gaz et de la température ambiante, et à partir des propriétés du gaz. La valeur mesurée F peut être transmise à l'utilisateur par une liaison filaire ou par une liaison sans fil.

Selon un avantage, du fait que le capteur 200 ne consomme pas d'énergie, seule la puissance nécessaire au fonctionnement de l'unité de traitement est fournie par la source d'alimentation 308. Le dispositif de mesure de débit est ainsi particulièrement économe en énergie, par exemple de consommation inférieure à 100 $\mu$W. Le dispositif 300 peut alors être alimenté par une pile, et le dispositif de mesure de débit de fonctionner sur plusieurs années sans remplacement de la pile.

Selon un autre avantage, en raison des dimensions faibles de la plateforme, une variation de débit de gaz se traduit par une variation particulièrement rapide de la température de la plateforme. On obtient un dispositif particulièrement rapide, par exemple capable de détecter une variation de débit en moins de 1 s.

Selon un autre avantage, la perte de charge engendrée par le dispositif est particulièrement faible, du fait que le capteur 200 a des dimensions particulièrement faibles et que sa présence n'affecte ainsi pas significativement l'écoulement du gaz dans le tube.

Préalablement à la mesure de débit, on réalise de préférence une phase d'étalonnage. Cette phase d'étalonnage consiste à faire circuler dans le tube 302 un gaz de même nature et à la même pression que le gaz à mesurer. Le gaz injecté est à une température d'étalonnage Tg0 donnée, différente de la température ambiante Tamb0, par exemple supérieure à la température ambiante. On fait varier le débit Fg0 du gaz, et on mesure la tension VthO fournie par le capteur 200. Les valeurs de la tension VthO sont ainsi étalonnées en fonction du débit de gaz Fg0 et peuvent être stockées dans une mémoire de l'unité de traitement 306.

On peut mesurer le débit du gaz lorsque la température du gaz et la température ambiante sont les mêmes que pendant la phase d'étalonnage. Pour cela, l'unité de traitement mesure la tension Vth du capteur 200, et fournit comme valeur mesurée F la valeur pour laquelle la valeur étalonnée VthO est égale à la valeur mesurée Vth. On peut alors prévoir différentes températures d'étalonnage pour différentes températures du gaz.

On peut aussi mesurer le débit du gaz lorsque sa température Tg et la température ambiante Tamb sont différentes des températures Tg0 et Tamb0 de la phase d'étalonnage. Pour cela, après avoir mesuré la tension Vth fournie par le capteur, l'unité de traitement fournit comme valeur mesurée F la valeur pour laquelle la valeur de tension étalonnée VthO vérifie la relation :

$$\mathtt{Vth0} \quad = \quad \frac{\mathtt{Tg0-Tamb0}}{\mathtt{Tg-Tamb}} \mathtt{Vth.}$$

On peut ainsi mesurer des débits de gaz à différentes températures avec une seule température d'étalonnage, ce qui simplifie l'opération d'étalonnage.

Par ailleurs, l'étalonnage peut être commun pour des dispositifs similaires dont les capteurs de vitesse ont des plateformes de mêmes dimensions et des bras différents. Ces capteurs ont des sensibilités à la vitesse du gaz différentes, correspondant par exemple à des plages de mesure différentes. On réalise l'étalonnage en utilisant un capteur dont les bras ont une conductance thermique K0 éventuellement différente de la conductance thermique K des bras du capteur 200. On considère ici la conductance thermique représentée par les bras en parallèle entre la plateforme et le substrat. Pour chaque valeur du débit Fg0, on calcule, à partir de la valeur de tension VthO, la puissance thermique P0 conduite par les bras de la plateforme vers le substrat au cours de l'étalonnage, d'après la relation :

$$\mathtt{P0=K0} \; \frac{\mathtt{Vth0}}{\mathtt{Snp}}$$

où Snp est le coefficient de Seebeck des couples thermoélectriques 214N-214P. On calcule en outre la température Tp0 de la plateforme au cours de l'étalonnage, par la relation :

$$Tp0 = Vth0 * Snp + Tamb.$$

On en déduit des valeurs h0 du coefficient d'échange thermique entre la plateforme et le gaz, définies par la relation :

$$h0 = \frac{P0}{S(Tg0-Tp0)}.$$

Où S est la surface de la plateforme. On a ainsi obtenu les valeurs h0 du coefficient d'échange étalonnées en fonction du débit Fg0. Lors de la phase de mesure de débit, on mesure la tension Vth fournie par le capteur, et on détermine la puissance P conduite par les bras de la plateforme vers le substrat au cours de la mesure, fournie par la relation :

$$P = K\frac{Vth}{Snp}.$$

On calcule la température mesurée Tp de la plateforme, par la relation :

$$Tp = Vth * Snp + Tamb.$$

On en déduit le coefficient d'échange thermique mesuré h entre la plateforme et le gaz, défini par la relation :

$$h = \frac{P}{S(Tg-Tp)}.$$

La valeur mesurée F du débit est alors la valeur pour laquelle la valeur étalonnée h0 est égale à la valeur mesurée h. On peut mesurer ainsi le débit parce que le dispositif d'étalonnage et le dispositif de mesure ont des plateformes de mêmes dimensions, et ces dispositifs ont alors des coefficients d'échange thermique entre gaz et plateforme considérés égaux. On peut ainsi, après une seule opération d'étalonnage, utiliser divers dispositifs du type du dispositif 300, ayant des plages de mesures différentes et/ou des sensibilités différentes.

A titre de variante, les valeurs h0, au lieu d'être déterminées par étalonnage, peuvent être obtenues théoriquement à partir des propriétés du gaz et des dimensions de la plateforme. Pour cela, on détermine le nombre de Prandtl Pr du gaz. Pour chaque valeur de débit Fg0, on détermine la vitesse du gaz au niveau de la plateforme, puis le nombre de Reynolds Re de l'écoulement du gaz autour de la plateforme, et on calcule, à partir des nombres Pr et Re par une corrélation connue de l'homme du métier, le nombre de Nusselt Nu qui caractérise l'échange thermique. A titre d'exemple, on peut utiliser la corrélation :

$$Nu = 0,42 * Pr^{1/5} + 0,57 * Pr^{1/3} Re^{1/2}$$

La valeur h0 est ensuite déduite de manière classique à partir du nombre Nu, des dimensions de la plateforme, et de la conductivité thermique du gaz. On peut ainsi mesurer des débits sans opération d'étalonnage, dans la plage de validité de la corrélation utilisée, en fournissant à l'unité de traitement les valeurs Tg et Tamb.

La figure 4 est une vue schématique de dessus du capteur 200 des figures 2A et 2B et d'un capteur 200' supplémentaire, de même structure que le capteur 200. Les capteurs 200 et 200' sont disposés sur le même substrat 208 et ont leurs bras et leurs plateformes situés au-dessus du même canal 206. Les capteurs 200 et 200' ont des plateformes de mêmes dimensions. Les capteurs 200 et 200' sont différents par les dimensions de leur bras respectifs, 204P, 204N, et 204P', 204N', et les bras des capteurs 200 et 200' ont ainsi des conductances thermiques respectives K et K' différentes.

L'ensemble des capteurs 200 et 200' peut être utilisé dans le dispositif 300 de la figure 3. Le capteur 200' a alors ses bornes 222' et 224' reliées à l'unité de traitement 306.

En fonctionnement, les capteurs 200 et 200' fournissent entre leurs bornes 222, 224 et 222', 224' des tensions Vth et Vth', différentes en raison de la différence de conductance thermique des bras. L'unité de traitement calcule la température Tg du gaz, fournie par la relation :

$$Tg= \frac{P*Tp-P'*Tp'}{P-P'}$$

où P et P' sont des puissances thermiques conduites par les bras et sont fournies par les relations :

$$P=K\frac{Vth}{Snp} \quad et \quad P'=K'\frac{Vth'}{Snp},$$

et Tp et Tp' sont des températures de plateforme fournies par les relations Tp = Vth*Snp + Tamp et Tp' = Vth'*Snp + Tamb.

L'ensemble des capteurs 200 et 200' constitue ainsi un capteur de la température Tg du gaz, autonome en énergie et particulièrement simple à réaliser en même temps que le capteur 200.

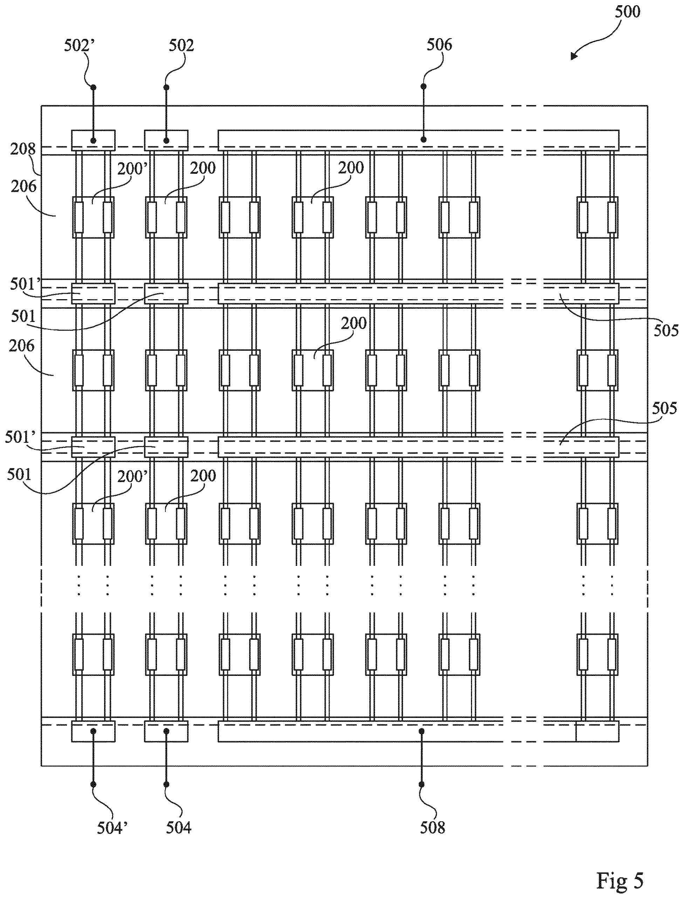

La figure 5 représente une matrice 500 de capteurs du type du capteur 200 des figures 2A et 2B, sur un substrat 208 commun. La matrice est destinée à être utilisée dans un dispositif du type de celui de la figure 3 à l'emplacement du capteur 200.

Dans chaque rangée de la matrice 500, les plateformes sont situées au-dessus d'un même canal 206 orienté dans le sens de la rangée, et sont soumises à l'écoulement du gaz.

Les capteurs 200' de la première colonne (à gauche) et les capteurs 200 de la deuxième colonne ont, de même que les capteurs 200' et 200 de la figure 4, des plateformes de mêmes dimensions et des bras de conductances thermiques différentes. Les plateformes de la première colonne sont reliées en série entre des bornes 502' et 504' par des plots métalliques 501' communs aux capteurs voisins. Les plateformes de la deuxième colonne sont reliées en série entre des bornes 502 et 504 par des plots métalliques 501 communs aux capteurs voisins.

En partie droite de la matrice, les plateformes de chaque rangée sont connectées en parallèle entre des plots métalliques 505 communs aux capteurs de la rangée. Les rangées sont reliées en série entre des bornes 506 et 508, les plots 505 étant communs aux rangées voisines.

Dans un dispositif de type de celui de la figure 3, la matrice 500 remplace le capteur 200 et la source d'alimentation 308. Les bornes 502, 504 et 502', 504' sont reliées à l'unité de traitement 306. Les bornes 506 et 508 sont reliées aux bornes d'alimentation de l'unité de traitement 306.

En fonctionnement, la partie droite de la matrice fournit entre les bornes 506 et 508 une puissance suffisante pour alimenter l'unité de traitement, par exemple une puissance de l'ordre d'une centaine de $\mu$W. En effet, du fait que les rangées de la partie droite sont en série, les tensions produites s'ajoutent, et du fait que les plateformes sont en parallèle dans chaque rangée, leurs courants s'ajoutent. En outre, en cas de défaillance d'un élément entre les bornes 506 et 508, la puissance délivrée reste suffisante pour alimenter l'unité de traitement, du fait qu'un seul des capteurs est affecté par la défaillance, et que les autres capteurs suffisent à alimenter l'unité de traitement.

L'unité de traitement détermine la valeur mesurée F du débit de gaz à partir des tensions n*Vth entre les bornes 502 et 504 et n*Vth' entre les bornes 502' et 504', où n est le nombre de capteurs des première et deuxième colonnes. Pour cela, à titre d'exemple, l'unité de traitement détermine, à partir des tensions n*Vth et n*Vth', les tensions Vth et Vth' fournies en moyenne par les capteurs respectifs des deuxième et première colonnes, détermine la température Tg du gaz à partir des tensions Vth et Vth' de la manière décrite en relation avec la figure 4, puis détermine le débit du gaz à partir de la tension moyenne Vth de la manière décrite en relation avec la figure 3, par exemple après une phase d'étalonnage de la tension moyenne Vth en fonction du débit du gaz.

Selon un avantage, le dispositif de mesure de débit ainsi obtenu constitue sa propre source d'énergie. En outre, les différents éléments de la matrice 500 sont particulièrement faciles à réaliser simultanément et à mettre en oeuvre ensemble dans le dispositif.

Des modes de réalisation particuliers ont été décrits. Diverses variantes et modifications apparaîtront à l'homme de l'art. En particulier, bien que l'on ait décrit ci-dessus des dispositifs de mesure de débit d'un gaz, on peut obtenir des dispositifs similaires de mesure de vitesse d'un gaz, dans lesquels l'unité de traitement utilise, à titre d'exemple, une relation, évidente pour l'homme du métier, entre le débit du gaz et la vitesse du gaz autour du capteur 200, des capteurs 200 et 200' ou de la matrice 500. A titre de variante, le tube 302 peut être omis dans le dispositif de mesure de vitesse. Dans un dispositif de mesure de vitesse, on peut prévoir une phase d'étalonnage de la tension fournie par le capteur 200 en fonction de la vitesse du gaz, correspondant à une phase d'étalonnage décrite ci-dessus en relation avec la figure 3, dans laquelle on remplace les différentes valeurs de débit Fg0 par des valeurs de vitesse du gaz.

On a décrit, en relation avec la figure 4, des capteurs 200 et 200' différant par la conductivité thermique de leurs bras. On pourra utiliser deux capteurs qui diffèrent par d'autres caractéristiques, telles que par exemple les dimensions de leurs plateformes. A titre d'exemple, on obtient au cours d'une phase d'étalonnage des valeurs étalonnées VthO et Vth0' des tensions fournies par les deux capteurs, en fonction de débits de gaz respectifs Fg0 et Fg0'. Au cours d'une phase de mesure, l'unité de traitement mesure les tensions Vth et Vth'. A partir des valeurs Vth et Vth', on peut alors déterminer la température du gaz. A titre d'exemple, on détermine la température du gaz parmi un ensemble de valeurs Tgtest. Pour chaque valeur Tgtest, on détermine pour chacun des deux capteurs une valeur de débit mesuré, respectivement F et F', de la manière décrite en relation avec la figure 3 en faisant l'hypothèse que le gaz est à la température Tgtest. La température mesurée du gaz Tg est alors la valeur Tgtest pour laquelle les valeurs de débit F et F' sont égales.

En outre, bien que l'on ait décrit ci-dessus une phase d'étalonnage avec le même gaz à la même pression que le gaz à mesurer, on peut étalonner le dispositif avec un gaz différent du gaz à mesurer et/ou à une pression différente. En particulier, on peut étalonner le dispositif avec un gaz dont le nombre de Prandtl est sensiblement le même que celui du gaz à mesurer. Pour cela, on peut obtenir les valeurs étalonnées VthO en fonction du nombre de Reynolds de l'écoulement au lieu du débit Fg0. La tension Vth obtenue au cours de la phase de mesure permet de déterminer un nombre de Reynolds mesuré, d'une manière similaire à celle décrite en relation avec la figure 3 pour déterminer la valeur mesurée F. On détermine alors la valeur mesurée F de manière connue à partir du nombre de Reynolds mesuré, des propriétés du gaz et des dimensions du dispositif.

Bien que les modes de réalisation décrits utilisent un capteur de vitesse du type particulier de la figure 2, on peut utiliser tout type de dispositif thermoélectrique comprenant une plateforme suspendue par des bras au-dessus d'un support, les premiers bras comportant des pistes thermoélectriques configurées pour fournir une tension à partir de la différence entre les températures de la première plateforme et du support. Ainsi, la plateforme peut comprendre plus de quatre bras comportant des pistes thermoélectriques de types alternés reliées en série et formant des jonctions situées successivement sur la plateforme et sur le substrat.

De plus, bien que les capteurs décrits comprennent deux paires 214N-214P connectées en parallèle, les capteurs peuvent comprendre une seule association série d'au moins deux pistes thermoélectriques de types alternés, ou plus de deux telles associations série connectées en parallèle.

En outre, bien qu'un couple de matériaux thermoélectriques particulier ait été décrit pour les pistes thermoélectriques, on peut utiliser tout couple adapté de matériaux thermoélectriques.

De plus, bien que, dans les capteurs décrits, la plateforme soit située au-dessus d'un canal, la plateforme peut être située au-dessus de toute cavité permettant d'isoler thermiquement la plateforme du substrat.

En outre, bien que les plateformes décrites soient rectangulaires, chaque plateforme peut avoir toute autre forme adaptée à être suspendue, en particulier comprendre une ou plusieurs ouvertures destinées à améliorer l'échange thermique entre la plateforme et le gaz, et à faciliter le procédé de fabrication de la cavité sous la plateforme.

De plus, bien que les bras décrits comprennent des portions d'une couche isolante supportant des pistes thermoélectriques, cette portion de couche isolante peut être omise. Bien que, dans les modes de réalisation décrits, chaque bras comporte une seule piste thermoélectrique, d'autres modes de réalisation sont possibles dans lesquels des bras n'ont pas de piste thermoélectrique et/ou des bras comprennent plusieurs pistes thermoélectriques.

En outre, bien que, dans le mode de réalisation décrit en relation avec la figure 5, un dispositif thermoélectrique particulier alimente l'unité de traitement, on peut utiliser, pour alimenter l'unité de traitement, tout type de dispositif thermoélectrique adapté à produire une puissance d'alimentation à partir de la différence entre la température du gaz et la température ambiante. En particulier, on peut utiliser toute association série/parallèle de capteurs du type du capteur 200, par exemple une matrice dont les capteurs de chaque colonne sont en série et dont les colonnes sont en parallèle.

Divers modes de réalisation avec diverses variantes ont été décrits ci-dessus. On notera que l'homme de l'art pourra combiner divers éléments de ces divers modes de réalisation et variantes sans faire preuve d'activité inventive. En particulier, on peut remplacer le capteur de la figure 2 par la première ou deuxième colonne de la matrice 500 de la figure 5, ou par une matrice comprenant plusieurs rangées de capteurs en parallèle reliées en série, ou par une matrice comprenant toute association série/parallèle de capteurs du type du capteur 200. La présence d'une colonne permet d'augmenter la tension fournie et ainsi d'améliorer le rapport signal sur bruit. La présence de plusieurs colonnes permet d'augmenter la robustesse du dispositif en cas de défaillance d'un élément d'une colonne.

En outre, on peut remplacer l'un et/ou l'autre des capteurs de la figure 4, par une des colonnes de la matrice 500 de la figure 5 ou par une matrice de capteurs.

**Revendications**

1. Dispositif de mesure de vitesse ou de débit d'un gaz (102) à température (Tg) différente d'une température ambiante, comprenant :

   une première plateforme (202) suspendue par des premiers bras (204P, 204N) au-dessus d'un support (208) adapté (303) à être maintenu à la température ambiante, les premiers bras comportant des pistes thermoélectriques (214P, 214N) configurées pour fournir une première tension à partir de la différence entre les températures de la première plateforme et du support ; et

une unité de traitement (306) adaptée à fournir la mesure (F) de vitesse ou de débit à partir de la première tension, de la température du gaz et de la température ambiante.

2. Dispositif selon la revendication 1, comprenant en outre un capteur de température ambiante.

3. Dispositif selon la revendication 1 ou 2, comprenant en outre un capteur de température du gaz.

4. Dispositif selon la revendication 1 ou 2, comprenant en outre une deuxième plateforme (202') suspendue par des deuxièmes bras (204P', 204N') au-dessus du support (208),

les deuxièmes bras comportant des pistes thermoélectriques (214P', 214N') configurées pour fournir une deuxième tension à partir de la différence entre les températures de la deuxième plateforme et du support, les premiers (204P, 204N) et deuxièmes (204P', 204N') bras ayant des résistances thermiques différentes et/ou les première (202) et deuxième (202') plateformes ayant des dimensions différentes, et l'unité de traitement (306) étant adaptée à fournir la température du gaz à partir des première et deuxième tensions.

5. Dispositif selon la revendication 4, dans lequel les plateformes (202, 202') sont de mêmes dimensions, les premiers bras pris en parallèle (204N, 204P) ont une conductance thermique K et les deuxièmes bras pris en parallèle (204N', 204P') ont une conductance thermique K', et l'unité de traitement (306) est adaptée à :

calculer la température Tp de la première plateforme à partir de la première tension et de la température ambiante, et la température Tp' de la deuxième plateforme à partir de la deuxième tension et de la température ambiante ; et
calculer la température Tg du gaz vérifiant la relation :

$$Tg = \frac{P*Tp - P'*Tp'}{P - P'},$$

où P et P' vérifient les relations

$$P = K*(Tp - Tamb) \quad et \quad P' = K'*(Tp' - Tamb),$$

Tamb étant la température ambiante.

6. Dispositif selon l'une quelconque des revendications 1 à 5, dans lequel, pour chaque plateforme (202, 202'), les bras pris en parallèle ont une conductance thermique comprise entre 1 et 1000 nW/K et la plateforme a entre 5 et 200 µm de côtés.

7. Dispositif selon l'une quelconque des revendications 1 à 6, comprenant une pluralité (500) de premières plateformes (202) suspendues au-dessus du support par des bras comportant des pistes thermoélectriques, les pistes thermoélectriques des diverses premières plateformes étant reliées en série.

8. Dispositif selon l'une quelconque des revendications 1 à 7, dans lequel l'unité de traitement (306) est alimentée par un dispositif thermoélectrique d'alimentation (500) adapté à générer une puissance à partir de la différence entre la température du gaz et la température ambiante.

9. Dispositif selon la revendication 8, dans lequel le dispositif thermoélectrique d'alimentation est une matrice (500) de troisièmes plateformes (202) suspendues au-dessus du support (208) par des bras comportant des pistes thermoélectriques, les pistes thermoélectriques des troisièmes plateformes d'une même rangée étant connectées en parallèle et les rangées étant connectées en série.

10. Dispositif selon l'une quelconque des revendications 1 à 9, dans lequel chaque plateforme (202) est située audessus d'un canal (206), deux bras (204P) comportant chacun une piste thermoélectrique (214P) d'un premier type reliant un côté de la plateforme à l'un des bords du canal, et deux bras (204N) comportant chacun une piste thermoélectrique (214N) d'un deuxième type reliant le côté opposé de la plateforme à l'autre bord du canal.

11. Dispositif selon l'une quelconque des revendications 1 à 10, dans lequel les bras (204P, 204N) comprennent des bandes électriquement isolantes (226) sous les pistes thermoélectriques (214P, 214N).

12. Dispositif selon l'une quelconque des revendications 1 à 11, dans lequel les pistes thermoélectriques (214P, 214N) sont en tellure de bismuth dopé.

13. Dispositif de mesure de débit selon l'une quelconque des revendications 1 à 12, dans lequel le support (208) est disposé dans un tube (302) de circulation du gaz (102) .

**Patentansprüche**

1. Vorrichtung zur Messung der Geschwindigkeit oder des Durchflusses eines Gases (102) mit einer Temperatur (Tg), die sich von einer Umgebungstemperatur unterscheidet, umfassend:

eine erste Plattform (202), die mittels erster Arme (204P, 204N) über einem Träger (208) aufgehängt ist, der dazu eingerichtet (303) ist, auf Umgebungstemperatur gehalten zu werden, wobei die ersten Arme thermoelektrische Streifen (214P, 214N) aufweisen, die dazu konfiguriert sind, eine erste Spannung aus der Differenz zwischen den Temperaturen der ersten Plattform und des Trägers zu liefern; und
eine Verarbeitungseinheit (306), die dazu eingerichtet ist, die Messung (F) der Geschwindigkeit oder des Durchflusses aus der ersten Spannung, der Temperatur des Gases und der Umgebungstemperatur zu liefern.

2. Vorrichtung nach Anspruch 1, ferner umfassend einen Sensor für die Umgebungstemperatur.

3. Vorrichtung nach Anspruch 1 oder 2, ferner umfassend einen Sensor für die Gastemperatur.

4. Vorrichtung nach Anspruch 1 oder 2, ferner umfassend eine zweite Plattform (202'), die mittels zweiter Arme (204P', 204N') über dem Träger (208) aufgehängt ist,

wobei die zweiten Arme thermoelektrische Streifen (214P', 214N') aufweisen, die dazu konfiguriert sind, eine zweite Spannung aus der Differenz zwischen den Temperaturen der zweiten Plattform und des Trägers zu liefern, wobei die ersten (204P, 204N) und zweiten (204P', 204N') Arme unterschiedliche thermische Widerstände besitzen und/oder die ersten (202) und zweiten (202') Plattformen unterschiedliche Abmessungen besitzen, und wobei die Verarbeitungseinheit (306) dazu eingerichtet ist, aus den ersten und zweiten Spannungen die Temperatur des Gases zu liefern.

5. Vorrichtung nach Anspruch 4, wobei die Plattformen (202, 202') die gleichen Abmessungen besitzen, die parallel genommenen ersten Arme (204N, 204P) eine Wärmeleitfähigkeit K und die parallel genommenen zweiten Arme (204N', 204P') eine Wärmeleitfähigkeit K' besitzen, und die Verarbeitungseinheit (306) dazu eingerichtet ist:

die Temperatur Tp der ersten Plattform aus der ersten Spannung und der Umgebungstemperatur und die Temperatur Tp' der zweiten Plattform aus der zweiten Spannung und der Umgebungstemperatur zu berechnen; und
die Temperatur Tg des Gases zu berechnen, welche die Beziehung erfüllt:

$$Tg = \frac{P*Tp - P'*Tp'}{P - P'},$$

wobei P und P' die folgenden Beziehungen erfüllen

$$P = K*(Tp - Tamb) \quad und \quad P' = K'*(Tp' - Tamb),$$

wobei Tamb die Umgebungstemperatur ist.

**6.** Vorrichtung nach einem der Ansprüche 1 bis 5, wobei für jede Plattform (202, 202') die parallel genommenen Arme eine Wärmeleitfähigkeit zwischen 1 und 1000 nW/K besitzen und die Plattform zwischen 5 und 200 $\mu$m an Seiten-längen hat.

**7.** Vorrichtung nach einem der Ansprüche 1 bis 6, umfassend eine Mehrzahl (500) von ersten Plattformen (202), die mittels Armen mit thermoelektrischen Streifen über dem Träger aufgehängt sind, wobei die thermoelektrischen Streifen von verschiedenen ersten Plattformen in Reihe miteinander verbunden sind.

**8.** Vorrichtung nach einem der Ansprüche 1 bis 7, wobei die Verarbeitungseinheit (306) von einer thermoelektrischen Versorgungseinrichtung (500) versorgt wird, die dazu eingerichtet ist, eine Leistung aus dem Unterschied zwischen der Temperatur des Gases und der Umgebungstemperatur zu erzeugen.

**9.** Vorrichtung nach Anspruch 8, wobei die thermoelektrische Versorgungseinrichtung eine Matrix (500) aus dritten Plattformen (202) ist, die über dem Träger (208) mittels Armen mit thermoelektrischen Streifen aufgehängt sind, wobei die thermoelektrischen Streifen von dritten Plattformen einer gleichen Reihe parallel verbunden sind und die Reihen in Reihe verbunden sind.

**10.** Vorrichtung nach einem der Ansprüche 1 bis 9, wobei sich jede Plattform (202) über einem Kanal (206) befindet, wobei zwei Arme (204P) jeweils einen thermoelektrischen Streifen (214P) eines ersten Typs aufweisen, der eine Seite der Plattform mit einem der Ränder des Kanals verbindet, und zwei Arme (204N) jeweils einen thermoelektrischen Streifen (214N) eines zweiten Typs aufweisen, der die gegenüberliegende Seite der Plattform mit dem anderen Rand des Kanals verbindet.

**11.** Vorrichtung nach einem der Ansprüche 1 bis 10, wobei die Arme (204P, 204N) elektrisch isolierende Bahnen (226) unter den thermoelektrischen Streifen (214P, 214N) aufweisen.

**12.** Vorrichtung nach einem der Ansprüche 1 bis 11, wobei die thermoelektrischen Streifen (214P, 214N) aus dotiertem Wismut-Tellurid gebildet sind.

**13.** Vorrichtung zur Durchflussmessung nach einem der Ansprüche 1 bis 12, wobei der Träger (208) in einem Rohr (302) zur Leitung des Gases (102) angeordnet ist.

**Claims**

**1.** Device for measuring the velocity or flow of a gas (102) at a temperature (Tg) different from an ambient temperature, comprising:

a first platform (202) suspended by first arms (204P, 204N) above a support (208) suitable (303) for being maintained at the ambient temperature, the first arms comprising thermoelectric tracks (214P, 214N) configured for supplying a first voltage based on the difference between the temperatures of the first platform and the support; and
a processing unit (306) suitable for supplying the measurement (F) of velocity or flow based on the first voltage, the temperature of the gas and the ambient temperature.

**2.** Device according to claim 1, also comprising an ambient temperature sensor.

**3.** Device according to claim 1 or 2, also comprising a gas temperature sensor.

**4.** Device according to claim 1 or 2, also comprising a second platform (202') suspended by second arms (204P', 204N') above the support (208),

the second arms comprising thermoelectric tracks (214P', 214N') configured for supplying a second voltage based on the difference between the temperatures of the second platform and the support,
the first (204P, 204N) and second (204P', 204N') arms having different thermal resistances and/or the first (202) and second (202') platforms having different dimensions, and
the processing unit (306) being suitable for supplying the temperature of the gas based on the first and second voltages.

**5.** Device according to claim 4, in which the platforms (202, 202') have the same dimensions, the first arms taken in parallel (204N, 204P) have a thermal conductance K and the second arms taken in parallel (204N', 204P') have a thermal conductance K', and the processing unit (306) is suitable for:

calculating the temperature Tp of the first platform based on the first voltage and the ambient temperature, and the temperature Tp' of the second platform based on the second voltage and the ambient temperature; and calculating the temperature Tg of the gas satisfying the relationship:

$$Tg = \frac{P \star Tp - P' \star Tp'}{P - P'},$$

where P and P' satisfy the relationships

$$P = K \star (Tp - Tamb) \text{ and } P' = K' \star (Tp' - Tamb),$$

Tamb being the ambient temperature.

**6.** Device according to any one of claims 1 to 5, in which, for each platform (202, 202'), the arms taken in parallel have a thermal conductance comprised between 1 and 1000 nW/K and the platform has sides of between 5 and 200 $\mu$m.

**7.** Device according to any one of claims 1 to 6, comprising a plurality (500) of first platforms (202) suspended above the support by arms comprising thermoelectric tracks, the thermoelectric tracks of the various first platforms being connected in series.

**8.** Device according to any one of claims 1 to 7, in which the processing unit (306) is supplied by a thermoelectric supply device (500) suitable for generating power based on the difference between the temperature of the gas and the ambient temperature.

**9.** Device according to claim 8, in which the thermoelectric supply device is a matrix (500) of third platforms (202) suspended above the support (208) by arms comprising thermoelectric tracks, the thermoelectric tracks of the third platforms of one and the same row being connected in parallel and the rows being connected in series.

**10.** Device according to any one of claims 1 to 9, in which each platform (202) is located above a channel (206), two arms (204P) each comprising a thermoelectric track (214P) of a first type connecting a side of the platform to one of the edges of the channel, and two arms (204N) each comprising a thermoelectric track (214N) of a second type connecting the opposite side of the platform to the other edge of the channel.

**11.** Device according to any one of claims 1 to 10, in which the arms (204P, 204N) comprise electrically insulating strips (226) under the thermoelectric tracks (214P, 214N).

**12.** Device according to any one of claims 1 to 11, in which the thermoelectric tracks (214P, 214N) are made of doped bismuth telluride.

**13.** Device for measuring flow according to any one of claims 1 to 12, in which the support (208) is arranged in a pipe (302) for circulation of the gas (102).

Fig 1

200

222

2B

218

228

204P          204P
214P          214P

216          216

202

206

214N          214N

204N          204N

102

208

220

224

2B

Fig 2A

222          224

218   214P   216   214N   220

226

228   204P   202   204N   228

206          208

Fig 2B

300

102

202

216

200

206

208

304

302

303

308

PROC

306

→ F

Fig 3

222'

222

204P'          204P'

200'

206

204P          204P

200

208

204N'          204N'

204N          204N

224'

224

Fig 4

Fig 5

**EP 3 612 803 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6871538 B
- US 6662121 B1
- US 5231877 A
- US 5406841 A